# EUROPÄISCHE PATENTSCHRIFT

(11) **EP 0 598 286 B1**
(45) Veröffentlichungstag und Bekanntmachung des Hinweises auf die Patenterteilung: **01.09.1999**
(21) Anmeldenummer: 93117865.1
(22) Anmeldetag: 04.11.1993
(51) Int. Cl.: B01D 46/52, B01D 46/06, B01D 46/10, F02M 35/02

(54) **Filterelement in Form eines Flachfilters für Luftfiltervorrichtungen**
Flat filter type filter element for air filter devices
Elément filtrant du type plat pour installations d'épurateurs d'air

(30) Priorität: 17.11.1992 DE 4238735
(43) Veröffentlichungstag der Anmeldung: 25.05.1994
(73) Patentinhaber: KNECHT FILTERWERKE GMBH, 70376 Stuttgart (DE)
(72) Erfinder: Schneider, Horst, D-71336 Waiblingen (DE); Schweikert, Klaus, D-74182 Obersulm (DE)
(74) Vertreter: Patentanwalts-Partnerschaft Rotermund + Pfusch

(56) Entgegenhaltungen:
- DE-A- 1 455 727
- DE-A- 2 137 309
- DE-A- 4 138 948

## Beschreibung

Die Erfindung betrifft ein Filterelement in Form eines Flachfilters, insbesondere für Verbrennungsmotoren.

Luftfiltervorrichtungen von Verbrennungsmotoren dienen nicht nur zur Reinigung der in den Motoren für die Verbrennung benötigten Luft. Vielmehr haben sie auch die Aufgabe, die Ansauggeräusche des Motors zu verringern. Dementsprechend wird das Volumen des Luftfiltergehäuses auch unter akustischen Gesichtspunkten bemessen. Entsprechendes gilt auch für die Bemessung von Länge bzw. Querschnitt von Ansaugrohr und Auslaßtrichter des Gehäuses.

Allerdings ist es in beengten Motorräumen von Kraftfahrzeugen oftmals nur schwer möglich, Luftfiltergehäuse mit einem wünschenswerten Volumen unterzubringen, weil der zur Verfügung stehende Raum durch verschiedenartige Störkonturen eingeschränkt wird.

Ähnliches gilt auch für die Luftfilter in den Belüftungsanlagen der Insassenräume von Kraftfahrzeugen.

Zur Anpassung an die Störkonturen wurden bereits Luftfiltervorrichtungen konzipiert, deren Luftfiltergehäuse in der Filterebene einen grundsätzlich beliebigen Querschnitt haben können und zur Aufnahme entsprechend geformter Filterelemente vorgesehen sind.

Zur Herstellung entsprechender Filterelemente ist nach der DE-A 21 37 309 vorgesehen, zunächst eine etwa zickzackförmig gefaltete Filterbahn herzustellen, die mit einem thermoplastischen Kunstharz imprägniert ist. Sodann wird mittels entsprechender Preßwerkzeuge unter entsprechender Knautschung und Verformung der Endbereiche der die Zickzack-Faltung bildenden Taschen und Falze ein zur Ebene des Filterelementes paralleler flanschartig flacher Rand mit in Draufsicht prinzipiell beliebiger Form gepreßt. Der Preßvorgang erfolgt mit hohem Preßdruck und unter stärkerer Erwärmung, so daß das thermoplastische Material schweißfähig wird und der flache zusammengepreßte Randbereich eine gewisse Verfestigung erfährt.

Dieses seit langem bekannte Verfahren zur Herstellung von Flachfiltern mit praktisch beliebiger Form hat sich in der Praxis nicht durchsetzen können, da es produktionstechnisch außerordentlich aufwendig ist.

Aus diesem Grunde besitzen bisherige Luftfiltervorrichtungen im Bereich der Filterebene geometrisch einfach geformte Querschnitte, typischerweise mit Rechteck- oder Kreisform.

Die beispielsweise in der DE-A 41 38 848 beschriebenen rechteckigen Flachfilter bestehen aus einer entsprechend rechteckigen Filterbahn, wobei die Taschen bzw. Falze der Zickzack-Faltung quer zu zwei gegenüberliegenden Längsrändern des Filterelementes verlaufen und bis zu diesen Rändern hin einen gleichbleibenden Querschnitt aufweisen. An den Rändern sind die Taschen der Zickzackfaltung durch Verklebung, Verschweißung oder Randleisten des Filterelementes verschlossen.

Die kreisförmigen Filterelemente bestehen aus einer zickzackförmig gefalteten ringförmigen Filterbahn, deren Taschen und Falze radial zum Zentrum der ringförmigen Filterbahn ausgerichtet sind. Am Außen- sowie am Innenumfang der Filterbahn sind die Taschen wiederum durch Verklebung, Verschweißung bzw. Randleisten verschlossen. Auch bei diesem Filterelement verlaufen also die Taschen und Falze quer zur inneren bzw. äußeren Umrandung des Filterelementes.

Aufgabe der Erfindung ist es nun, ein Filterelement zu schaffen, welches einerseits eine verknautschungsfreie Zickzack-Faltung der Filterbahn aufweist und andererseits dem zur Verfügung stehenden Raum optimal angepaßt werden kann.

Diese Aufgabe wird erfindungsgemäß durch das im Anspruch 1 definierte Filterelement gelöst.

Die Erfindung beruht auf der Erkenntnis, daß der Rand sowie die Umfassung des Filterelementes grundsätzlich beliebige Richtungen relativ zu den Falzen und Taschen haben können und dementsprechend die Möglichkeit besteht, für den Rand und die Umfassung beliebige Formen zu wählen, bei denen der Rand bzw. die Umfassung in mehr oder weniger großen Bereichen schräg, gegebenenfalls auch unterschiedlich schräg, zu den Falzen und Taschen verlaufen.

Die Filterbahn kann zur Erzielung der gewünschten Form des Filterelementes vor oder nach Herstellung der etwa zickzackförmigen Faltung zugeschnitten werden.

Falls die Zickzackfaltung nach dem Zuschnitt hergestellt wird, wird die Filterbahn vor dem Zuschneiden in der Regel für die spätere Zickzackfaltung vorgefalzt.

Im übrigen kann der Zuschnitt mittels Wasserstrahles oder Lasers oder mittels einer Bandsäge od.dgl. erfolgen, wobei zumindest für den Zuschnitt der noch nicht zickzackförmig gefalteten Filterbahn praktisch sämtliche beim Zuschnitt von Textilien übliche bzw. mögliche Verfahren einsetzbar sind.

Gemäß einer bevorzugten Ausführungsform der Erfindung bestehen zumindest entweder die Filterbahn oder die Umfassung aus einem thermoplastischen bzw. mit Thermoplast beschichteten oder imprägnierten Material, so daß Filterbahn und Umfassung unter Erwärmung bzw. Wärmeeinwirkung miteinander verbunden bzw. verschweißt werden können.

In besonders bevorzugter Weise kann das Filterelement aus einer Filterpapierbahn bestehen, während die Umfassung aus thermoplastisch beschichtetem Papier oder einem thermoplastischen Vlies gebildet ist.

Statt dessen ist es auch möglich und vorteilhaft, für die Filterbahn ein thermoplastisches Filtervlies einzusetzen, wobei dann für die Umfassung Papier, gegebenenfalls mit thermoplastischer Beschichtung, oder ebenfalls ein thermoplastisches Vlies verwendet werden können.

In allen diesen Fällen kann die Verbindung zwischen der Filterbahn und der Umfassung durch Ultraschallschweißung erfolgen.

Grundsätzlich ist jedoch eine Verklebung möglich.

Die Umfassung kann aus einem Band bestehen, welches den Rand der Filterbahn unter seitlicher Verschließung der Taschen umfaßt.

Hierbei kann gegebenenfalls ein Metallflachband verwendet werden, welches auf seiner dem Rand der Filterbahn zugewandten Seite mit thermoplastischem Material bzw. mit einem thermoplastisch imprägnierten Papier oder Vlies belegt ist.

Darüber hinaus besteht auch die Möglichkeit, die randseitigen Enden der Taschen durch Verklebung oder Verschweißung zu schließen.

Insbesondere im letzteren Falle kann die Umfassung am Rand der Filterbahn auf der offenen Seite der Taschen angeordnet sein, derart, daß die Umfassung einen den Rand der Filterbahn überragenden Flansch bildet.

Um die filterwirksame Fläche des Filterelementes möglichst groß zu halten, kann die Umfassung aus einem filterwirksamen Material, beispielsweise einem Filtervlies, bestehen.

Im übrigen wird hinsichtlich vorteilhafter Merkmale der Erfindung auf die Ansprüche sowie die nachfolgende Erläuterung bevorzugter Ausführungsformen verwiesen, die in der Zeichnung dargestellt sind.

Dabei zeigt
- Fig. 1: eine Seitenansicht einer Luftfiltervorrichtung,
- Fig. 2: eine Ansicht entsprechend dem Pfeil II in Fig. 1,
- Fig. 3: eine Draufsicht entsprechend dem Pfeil III in Fig. 1,
- Fig. 4: ein plattenförmiges Filterelement in Draufsicht und
- Fig. 5: eine ausschnittsweise perspektivische Darstellung des Randes eines Filterelementes.

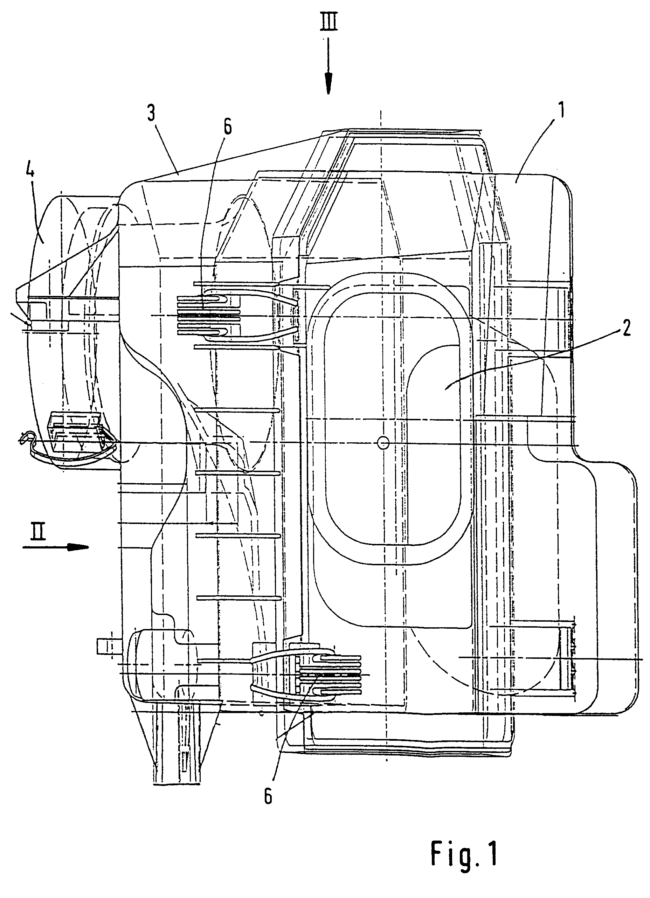

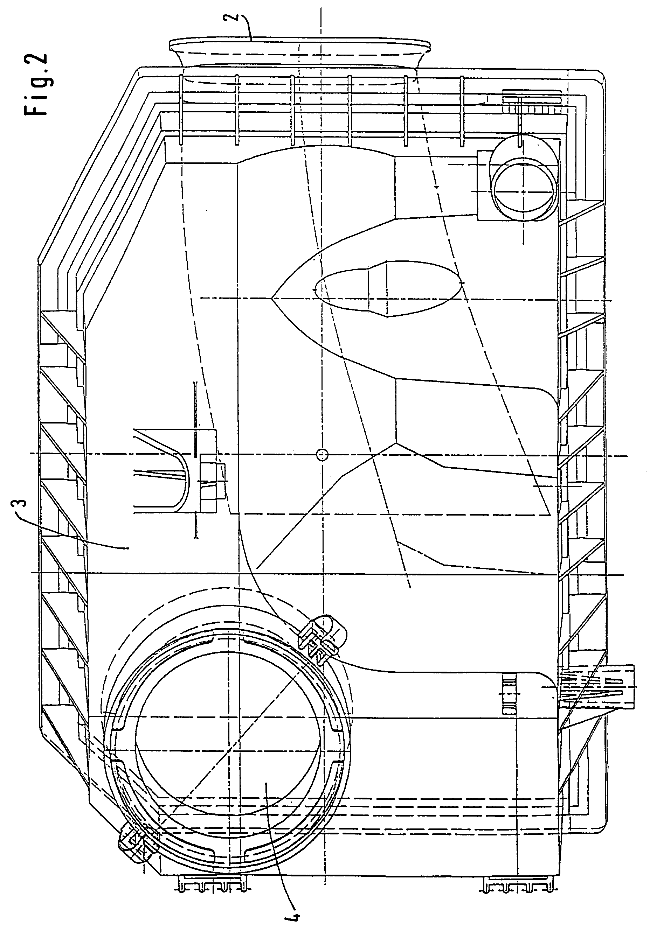

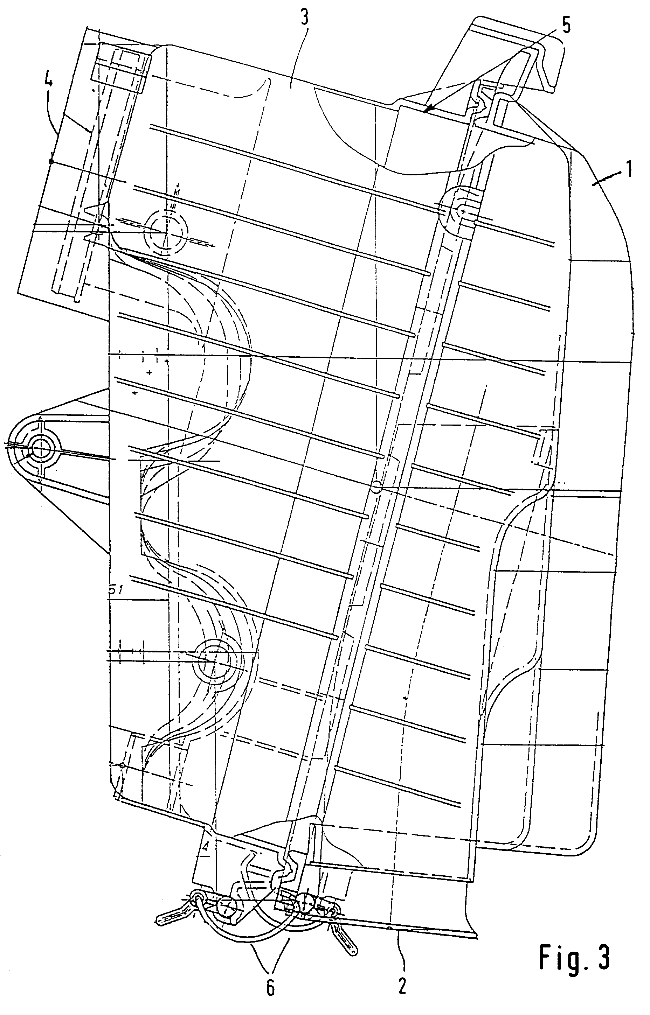

Die in den Fig. 1 bis 3 dargestellte Luftfilteranordnung besitzt ein Gehäuse mit einer eingangsseitigen Gehäusehälfte 1, in die Luft über ein Ansaugrohr 2 einzuströmen vermag, sowie mit einer ausgangsseitigen Gehäusehälfte 3, aus der die Luft über einen trichterartig geformten Auslaß 4 zu einem nicht dargestellten Verbrennungsmotor abströmt.

Zwischen den beiden Gehäusehälften 1 und 3 ist im Gehäuseinnenraum ein Platteneinsatz 5 ausgebildet, in den ein plattenförmiges Filterelement, d.h. ein sogenanntes Flachfilter, einlegbar ist, welches dann innerhalb des Gehäuses einen von der Gehäusehälfte 1 umfaßten Schmutzluftraum und einen von der Gehäusehälfte 3 umfaßten Reinluftraum voneinander abtrennt.

Die Gehäusehälften 1 und 3 sind mittels Spannbügel 6 miteinander verbunden, so daß sich die beiden Gehäusehälften 1 und 3 schnell zum Austausch des Filterelementes voneinander trennen lassen.

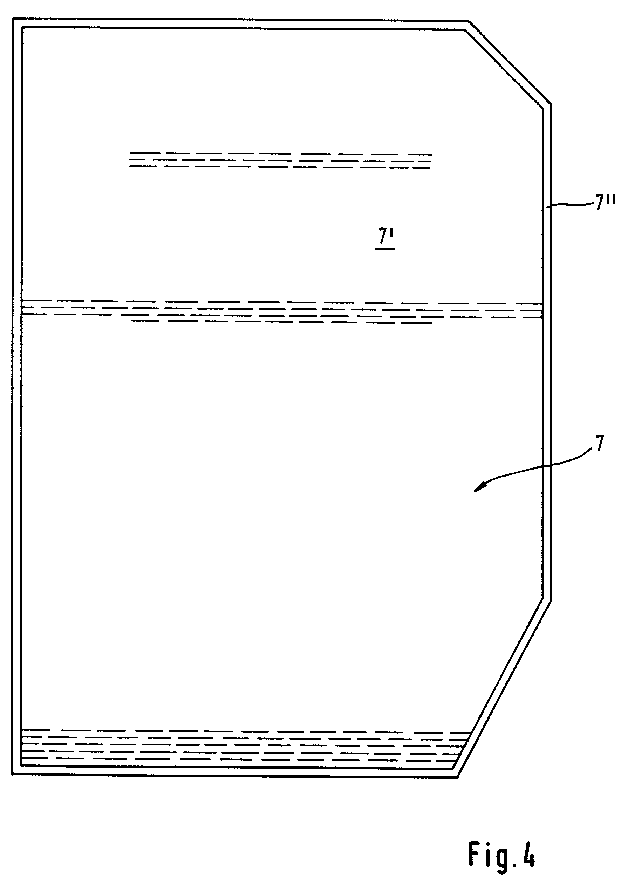

Das in Fig. 4 dargestellte plattenförmige Filterelement 7 besitzt eine dem Querschnitt des Platteneinsatzes angepaßte, im dargestellten Beispiel vieleckige Kontur. Dabei besteht das Filterelement 7 im wesentlichen aus einer etwa zickzackförmig gefalteten Filterpapierbahn 7', die entsprechend der gewünschten Form des Filterelementes 7 zugeschnitten und von einer Umfassung 7'' rahmenartig umrandet ist.

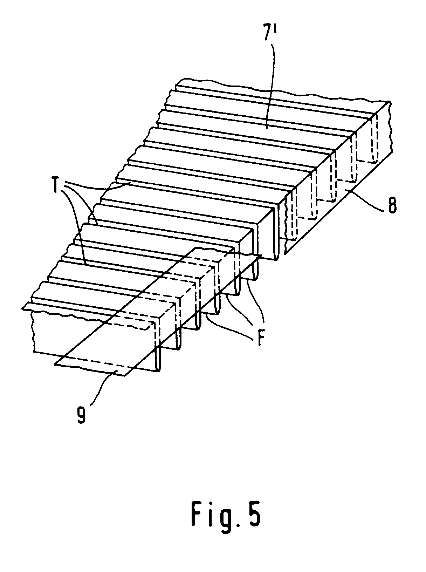

Wie aus der Fig. 5 ersichtlich ist, bildet die Filterpapierbahn 7' aufgrund ihrer etwa zickzackförmigen Faltung ein Streifenmuster aus nebeneinander liegenden Taschen T und Falzen F.

Dabei kann als Umfassung ein Band 8 angeordnet sein, welches umlaufend am Rand der Filterbahn 7' mit zur Filterebene etwa senkrechter Bandebene angeordnet ist und so mit der Filterbahn 7' verbunden ist, daß die randseitigen Enden der Taschen T durch das Band 8 abgeschlossen werden.

Das Band 8 kann aus einem relativ steifen Material bestehen, welches thermoplastische Eigenschaften hat oder mit einem Thermoplast beschichtet oder imprägniert ist, um das Band 8 - beispielsweise mittels Ultraschallschweißung - leicht mit der Filterbahn 7' verbinden zu können.

Zusätzlich oder alternativ kann auch vorgesehen sein, daß die Filterbahn 7' aus einem Material mit thermoplastischen

Eigenschaften, beispielsweise einem thermoplastisch imprägnierten Filterpapier besteht, um die Verbindung mit dem Band 8 zu erleichtern.

Im übrigen ist auch eine Verklebung zwischen dem Band 8 und der Filterbahn 7' möglich.

Das Band 8 kann auch aus einem Metallflachband bestehen, welches thermoplastisch beschichtet sein kann.

Gegebenenfalls können die randseitigen Enden der Taschen T auch durch Verklebung oder Verschweißung der einander zugewandten Taschenseiten verschlossen sein.

Insbesondere bei einer derartigen randseitigen Verschließung der Taschen T - aber auch bei Anordnung des Bandes 8 - besteht die Möglichkeit, als Umfassung am Rand der Filterbahn 7' auf der Seite der Taschenöffnungen einen umlaufenden Randstreifen 9 anzuordnen, welcher einen den Rand der Filterbahn 7' nach außen überragenden Flansch bildet, mit dem das Filterelement beispielsweise zwischen den Gehäusehälften 1 und 3 (vgl. die Fig. 1 bis 3) einspannbar ist.

Vorzugsweise besteht der Randstreifen 9 aus einem filterwirksamen Material, beispielsweise einem Filtervlies, um auch im Überlappungsbereich zwischen Filterbahn 7' und Randstreifen 9 Luftdurchlässigkeit zu gewährleisten.

Die Verbindung des Randstreifens 9 mit der Filterbahn 7' kann wiederum durch Verschweißung oder Verklebung erfolgen, wobei die Filterbahn 7' und/oder der Randstreifen 9 aus thermoplastischem Material oder einem mit Thermoplast beschichteten bzw. imprägnierten Material bestehen können.

Filterelemente, bei denen die Umfassung nach Art des Randstreifens 9 ausgebildet sind, besitzen eine relativ große Flexibilität, so daß das Filterelement gegebenenfalls auch leicht an eine gekrümmte Filterebene angepaßt werden kann.

Die randseitigen Enden der Taschen T der Filterbahn 7' des Filterelementes 7 können - wie oben erwähnt - auch durch Verklebung der einander zugewandten Taschenseiten miteinander verschlossen werden. Hierzu kann es vorteilhaft sein, vor dem Zuschnitt auf der noch nicht zickzackförmig gefalteten, gegebenenfalls aber schon vorgefalzten Filterbahn entsprechend der später gewünschten Kontur eine Klebstoffbahn, z.B. in Form einer "Klebstoffraupe", mittels einer beweglichen Spritzdüse aufzutragen. Danach wird die Filterbahn zickzackförmig gefaltet, wobei sich die Taschenseiten an der Klebstoffbahn miteinander verkleben. Nunmehr erfolgt der Zuschnitt der Filterbahn, indem dieselbe neben der Taschenverklebung durchtrennt wird. Die zwischen den Taschen T auf der Oberseite der Filterbahn an deren Rand verbleibenden Bereiche der Klebstoffbahn können nachfolgend zur Befestigung des Randstreifens 9 (vgl. Fig. 5) dienen.

Bei entsprechender Bemessung der noch nicht zugeschnittenen Filterbahn können zwei Klebstoffbahnen nebeneinander aufgetragen werden. Nach der Zickzackfaltung der Filterbahn und der damit bewirkten Taschenverklebung wird die Filterbahn zwischen den Klebstoffbahnen durchtrennt, so daß dann jede Klebstoffbahn die randseitige Taschenverklebung eines gesonderten Filterelementes bzw. seiner Filterbahn bildet.

## Patentansprüche

1. Filterelement in Form eines Flachfilters für Luftfiltervorrichtungen, insbesondere für Verbrennungsmotoren,
- mit einer etwa zickzackförmig nach Art eines Streifenmusters mit nebeneinander liegenden Taschen (T) und Falzen (F) gefalteten Filterbahn (7'),
- deren von der zickzackförmigen Faltung gebildete Taschen (T) und Falze (F) bis zum Rand der Filterbahn (7') gleichförmig, mit gleichbleibendem Querschnitt durchlaufen,
- wobei die Taschen (T) und Falze (F) am Rand der Filterbahn (7') an einer von der Filterbahn (7') gesonderten Umfassung (8,9) gehaltert sind, die zumindest bereichsweise schräg zur Richtung der Taschen (T) und Falze (F) angeordnet ist.

2. Filterelement nach Anspruch 1,
dadurch gekennzeichnet,
daß ein die Taschen (T) endseitig abschließendes Band (8) angeordnet ist.

3. Filterelement nach Anspruch 2,
dadurch gekennzeichnet,
daß das Band (8) als relativ steife rahmenartige Umfassung ausgebildet ist.

4. Filterelement nach einem der Ansprüche 1 bis 3,
dadurch gekennzeichnet,
daß die Taschen (T) an ihren randseitigen Enden durch Verklebung oder Verschweißung verschlossen sind.

5. Filterelement nach einem der Ansprüche 1 bis 4,
dadurch gekennzeichnet,
daß als Umfassung auf der Öffnungsseite der Taschen (T) am Rand der Filterbahn (7') ein den Rand der Filterbahn (7') flanschartig nach außen überragender Randstreifen (9) angeordnet ist.

6. Filterelement nach Anspruch 5,
dadurch gekennzeichnet,
daß der Randstreifen (9) aus filterwirksamem Material, beispielsweise aus Filterpapier oder -vlies, besteht.

7. Filterelement nach einem der Ansprüche 1 bis 6,
dadurch gekennzeichnet,
daß zumindest entweder die Filterbahn (7') oder die Umfassung (7'') aus einem thermoplastischen bzw. mit Thermoplast beschichteten oder imprägnierten Material besteht und Filterbahn (7') und Umfassung (7'') unter Erwärmung bzw. Wärmeeinwirkung miteinander verbunden bzw. verschweißt sind.

8. Filterelement nach einem der Ansprüche 1 bis 7,
dadurch gekennzeichnet,
daß die Filterbahn (7') aus einem Filterpapier und die Umfassung (7'') aus einem mit thermoplastischen Material beschichteten bzw. imprägnierten Papier bestehen.

9. Filterelement nach einem der Ansprüche 1 bis 7,
dadurch gekennzeichnet,
daß die Filterbahn (7') aus einem Filterpapier und die Umfassung (7'') aus einem thermoplastischen Vlies bestehen.

10. Filterelement nach einem der Ansprüche 1 bis 7,
dadurch gekennzeichnet,
daß die Filterbahn (7') aus einem thermoplastischen Filtervlies und die Umfassung (7'') aus Papier, gegebenenfalls mit thermoplastischer Beschichtung oder Imprägnierung, bestehen.

11. Filterelement nach einem der Ansprüche 1 bis 7,
dadurch gekennzeichnet,
daß die Filterbahn (7') aus einem thermoplastischen Filtervlies und die Umfassung (7'') ebenfalls aus einem thermoplastischen Vlies bestehen.

## Claims

1. Filter element in the shape of a flat filter for air filter devices, in particular for internal combustion engines
- with a filter strip (7') folded in a roughly zig-zag shape in the manner of a striped pattern with pockets (T) and folds (F) adjacent to one another,
- whose pockets (T) and folds (F) shaped by the zig-zag shaped folds extend up to the edge of the filter strip (7') uniformly, with a uniform cross-section,
- wherein the pockets (T) and folds (F) at the edge of the filter strip (7') are fastened at a surround (8, 9) separated from the filter strip (7'), the said surround, at least in regions, being arranged obliquely to the direction of the pockets (T) and folds (F).

2. Filter element according to claim 1, characterised in that a band (8) is arranged to close the pockets (T) at their end faces.

3. Filter element according to claim 2, characterised in that the band (8) is designed as a relatively stiff frame-like surround.

4. Filter element according to one of claims 1 to 3 characterised in that the pockets (T) at their ends on the edge sides are closed by glueing or welding.

5. Filter element according to one of claims 1 to 4 characterised in that as surround on the aperture side of the pockets (T) at the edge of the filter strip (7') there is arranged an edge strip (9) protruding outwards beyond the edge of the filter strip (7') in the manner of a flange.

6. Filter element according to claim 5 characterised in that the edge strip (9) consists of filter-effective material, for example of filter paper or fleece.

7. Filter element according to one of claims 1 to 6 characterised in that at least either the filter strip (7') or the surround (7'') consists of a thermoplastic or thermoplastically coated or impregnated material, and filter strip (7') and surround (7'') are connected or welded to one another by heating or the effect of heat.

8. Filter element according to one of claims 1 to 7 characterised in that the filter strip (7') consists of a filter paper and the surround (7'') consists of a paper coated or impregnated with thermoplastic material.

9. Filter element according to one of claims 1 to 7 characterised in that the filter strip (7') consists of a filter paper and the surround (7'') consists of a thermoplastic fleece.

10. Filter element according to one of claims 1 to 7 characterised in that the filter strip (7') consists of a thermoplastic filter fleece and the surround (7'') consists of paper, optionally with a thermoplastic coating or impregnation.

11. Filter element according to one of claims 1 to 7 characterised in that the filter strip (7') consists of a thermoplastic filter fleece and the surround (7'') also consists of a thermoplastic fleece.

## Revendications

1. Elément filtrant en forme de filtre plat pour dispositifs de filtration d'air, en particulier pour moteurs à combustion interne,
- comportant une bande filtrante (7') pliée à peu près en zigzag à la manière d'un motif à rayures avec poches (T) et plis (F) situés les uns à côté des autres,
- dont les poches (T) et les plis (F) formés par le pliage en zigzag traversent uniformément, avec section constante, jusqu'au bord de la bande filtrante (7'),
- les poches (T) et les plis (F) étant fixés au bord de la bande filtrante (7') à une ceinture (8, 9) séparée de la bande filtrante (7') qui est placée, au moins par endroits, obliquement par rapport à la direction des poches (T) et des plis (F).

2. Elément filtrant selon la revendication 1, caractérisé par le fait qu'il est prévu une bande (8) qui clôt les poches (T) du côté de leur extrémité.

3. Elément filtrant selon la revendication 2, caractérisé par le fait que la bande (8) forme une ceinture du genre cadre relativement rigide.

4. Elément filtrant selon l'une des revendications 1 à 3, caractérisé par le fait que les poches (T) sont fermées à leurs extrémités côté bord par collage ou par soudage.

5. Elément filtrant selon l'une des revendications 1 à 4, caractérisé par le fait que comme ceinture sur le côté ouverture des poches (T) est prévue sur le bord de la bande filtrante (7') une bande de bord (9) qui dépasse vers l'extérieur, à la manière d'une aile, du bord de la bande filtrante (7').

6. Elément filtrant selon la revendication 5, caractérisé par le fait que la bande de bord (9) est en matière filtrante, par exemple en papier filtre ou en voile filtrant.

7. Elément filtrant selon l'une des revendications 1 à 6, caractérisé par le fait qu'au moins soit la bande filtrante (7'), soit la ceinture (7''), est constituée d'une matière thermoplastique ou revêtue ou imprégnée de thermoplastique, et la bande filtrante (7') et la ceinture (7'') sont unies ou soudées l'une à l'autre avec chauffage ou action de chaleur.

8. Elément filtrant selon l'une des revendications 1 à 7, caractérisé par le fait que la bande filtrante (7') est constituée d'un papier filtre et la ceinture (7'') est constituée d'un papier revêtu ou imprégné de matière thermoplastique.

9. Elément filtrant selon l'une des revendications 1 à 7, caractérisé par le fait que la bande filtrante (7') est constituée d'un papier filtre et la ceinture (7'') est constituée d'un voile thermoplastique.

10. Elément filtrant selon l'une des revendications 1 à 7, caractérisé par le fait que la bande filtrante (7') est constituée d'un voile filtrant thermoplastique et la ceinture (7'') est constituée de papier, éventuellement avec revêtement ou imprégnation thermoplastique.

11. Elément filtrant selon l'une des revendications 1 à 7, caractérisé par le fait que la bande filtrante (7') est constituée d'un voile filtrant thermoplastique et la ceinture (7'') est constituée également d'un voile thermoplastique.
